# EUROPÄISCHE PATENTANMELDUNG

(11) **EP 2 439 435 A1**
(43) Veröffentlichungstag der Anmeldung: **11.04.2012**
(21) Anmeldenummer: 10013443.6
(22) Anmeldetag: 08.10.2010
(51) Int. Cl.: F16L 9/12, F24F 13/02, C08J 5/04

(54) **Fittings und Rohre, insbesondere für Lüftungssysteme**

(71) Anmelder: ifw Manfred Otte GmbH, 4563 Micheldorf (AT)
(72) Erfinder: Kastner, Friedrich, 4710 Grieskirchen (AT); Demmel, Andreas, 4694 Ohlsdorf (AT); Roock, Susanne, 4563 Micheldorf (AT)
(74) Vertreter: Landgraf, Elvira

(57) **Zusammenfassung**

Die Erfindung betrifft Fittings und Rohre, insbesondere für Lüftungssysteme, die aus mit Naturfasern oder natürlichen Materialien gefüllten Polymeren oder Biopolymeren bestehen.

## Beschreibung

Die Erfindung betrifft Fittings und Rohre aus nachwachsenden Stoffen, die insbesondere für Lüftungssysteme, insbesondere im Innenbereich von Gebäuden verwendbar sind.

Aus EP 1 267 114 A ist eine Rohrverbindungsanordnung mit einer speziellen Konstruktion bekannt, wobei mehrere Rastmittel zum lösbaren Koppeln des oberen Endes einer Verbindungsleitung vorgesehen sind, die voneinander gleichmäßig beabstandet sind. An der Verbindungsleitung sind entsprechende Gegenrastmittel vorgesehen.

Als Werkstoffe kommen aus einer umfangreichen Liste auch holzartige Werkstoffe in Frage.

Durch die Konstruktion soll die Anpassung an unterschiedliche Bodenhöhen erleichtert werden, sowie die Sicherheit der Verbindung, beispielsweise bei im Erdreich auftretendem Erdversatz gewährleistet werden.

Elemente von (Raum-)Lüftungssystemen für den Innenbereich werden derzeit im Allgemeinen aus verzinktem Blech, Edelstahl oder aus ggf. glasfaserverstärktem Polypropylen oder aus PVC hergestellt.

Insbesondere metallische Werkstoffe neigen aber durch die Entstehung von Kondenswasser im Lüftungssystem zur Korrosion.

Alle diese Werkstoffe werden unter hohem Energieaufwand hergestellt und ver- oder bearbeitet. Am Ende der Lebensdauer müssen sie aufwändig entsorgt werden.

Aufgabe der Erfindung war es Fittings und Rohre insbesondere für den Einsatz in Lüftungssystemen bereitzustellen, die im Wesentlichen aus nachwachsenden Rohstoffen gefertigt und ökologisch verträglich sind.

Gegenstand der Erfindung sind daher Fittings und Rohre (einschließlich weiterer erforderlicher Elemente), insbesondere für Lüftungssysteme, dadurch gekennzeichnet, dass sie aus mit Naturfasern oder mit natürlichen Materialien gefüllten Polymeren oder Biopolymeren hergestellt sind.

Diese Füllstoffe liegen in Form von Fasern, Pulver oder Mehl vor.

Die Matrix der Fittings und Rohre besteht aus Polymeren oder Biopolymeren. Als Polymere kommen beispielsweise Polyethylen (PE), Polypropylen (PP), Acrylnitril-Butadien-Styrol (ABS) oder Polyacetal (POM) in Frage.

Als Biopolymere kommen beispielsweise Polylactid (PLA), Bio-PE, Bio-PP, Bio-Polyester, Cellulosederivate oder Stärke-Blends in Frage.

Unter Naturfasern werden hier Holzfasern, holzartige Fasern, Papierfasern, Baumwollfasern, Kokos, Dattelpalme, Hanf, Flachs, Kenaf, Jute, Sisal und dergleichen verstanden.

Vorzugsweise werden der Polymermatrix Holzfasern oder holzähnliche Fasern zugesetzt.

Der Anteil der Naturfasern in den Fittings oder Rohren beträgt bis zu 70 Gew%, vorzugsweise 15 bis 45 Gew%.

Vorzugsweise beträgt die Länge der zugesetzten Naturfasern 0,01 bis 10 mm. Die Naturfaser können vorbehandelt, insbesondere hydrophobiert sein, z.B. durch Vorbehandlung mittels Acetylierung, Alkali, Silan oder Oxalsäure.

Gegebenenfalls kann die Mischung aus Polymeren und Naturfasern weitere Füllstoffe aufweisen, beispielsweise Bariumsulfat, Talkum, Glasfasern, Kreide, Kaolin, Asche, Ruß und dergleichen. Der Anteil an diesen Füllstoffen ist abhängig von den zu erzielenden Eigenschaften und kann bis zu 70 Gew% betragen. Des Weiteren können Additive und / oder Hilfsstoffe zugegeben werden,die bestimmte Eigenschaften wie z.B. antistatisches Verhalten sowie bakterienhemmendes Verhalten unterstützen und fördern.

Diese weiteren Füllstoffe dienen dazu die mechanischen Kennwerte zu verbessern und bestimmte Eigenschaften, wie beispielsweise Schallschutz, zu verbessern.

Je nach den gewünschten Eigenschaften bzw. der Verwendung und Größe des Formteils weisen die erfindungsgemäßen Fittings und Rohre eine Wandstärke von etwa 0,01 - 10 mm auf.

Die erfindungsgemäßen Fittings und Rohre weisen, insbesondere bei der Verwendung von Holzfasern oder holzähnlichen Fasern bereits gute Schalldämmwerte auf.

Die Fittings sind im Gegensatz zu entsprechenden Bauteilen aus Blech korrosionsbeständig. Aufgrund der ansprechenden Optik können die erfindungsgemäßen Fittings und Rohre auch über Putz verlegt werden.

Neben der ökologischen Nachhaltigkeit, wodurch sich die erfindungsgemäßen Fittings und Rohre auch für Niedrigenergie-, Passiv- und Ökohäuser eignen, zeichnen sie sich zusätzlich durch einen angenehmen Geruch aus, beispielsweise im Fall der Verwendung von Holzfasern durch einen angenehmen Holzgeruch.

Insbesondere sind die erfindungsgemäßen Fittings und Rohre für Raum(innen)lüftungssysteme, im Wasser- und Sanitärinstallationsbereich, für Transportanlagen (Rohrpost) und Elektroinstallationsrohre insbesondere Elektroinstallationssysteme oder Rohre, durch die Kabel geführt werden, und dergleichen geeignet.

Die Herstellung der Fittings und Rohre kann durch Verarbeitung der vorgefertigten Mischungen (Compounds) von Fasern und Polymer erfolgen. Ferner können die erfindungsgemäßen Fittings und Rohre auch in einer Anlage hergestellt werden, die statt der üblichen Spritzeinheit einen vorgeschalteten Inline-Compounder beinhaltet.

## Patentansprüche

1. Fittings und Rohre, insbesondere für Lüftungssysteme, **dadurch gekennzeichnet, dass** sie aus mit Naturfasern oder natürlichen Materialien gefüllten Polymeren oder Biopolymeren bestehen.

2. Fittings und Rohren ach Anspruch 1, **dadurch gekennzeichnet, dass** sie Polymeren ausgewählt aus der Gruppe bestehend aus Polyethylen (PE), Polypropylen (PP), Acrylnitril-Butadien-Styrol (ABS) oder Polyacetal (POM) enthaöten.

3. Fittings und Rohre nach Anspruch 1, **dadurch gekennzeichnet, dass** sie Biopolymeren ausgewählt aus der Gruppe bestehend aus Polylactid (PLA), Bio-PE, Bio-PP, Bio-Polyester, Cellulosederivate oder Stärke-Blends enthalten.

4. Fittings und Rohre nach einem der Ansprüche 1 bis 3, **dadurch gekennzeichnet, dass** sie Naturfasern ausgewählt aus der Gruppe bestehend aus Holzfasern, holzartige Fasern, Papierfasern, Baumwollfasern, Kokos, Dattelpalme, Hanf, Flachs, Kenaf, Jute und Sisal enthalten.

5. Fittings und Rohre nach einem der Ansprüche 1 bis 4, **dadurch gekennzeichnet, dass** der Anteil der Naturfasern im Polymer oder Biopolymer bis zu 70 Gew% beträgt.

6. Fittings und Rohre nach Anspruch 5, **dadurch gekennzeichnet, dass** der Anteil an Naturfasern im Polymer oder Biopolymer 15 bis 45 Gew% beträgt.

7. Fittings und Rohre nach einem der Ansprüche 1 bis 6, **dadurch gekennzeichnet, dass** die Naturfasern ein länge von 0,1 bis 10 mm aufweisen.

8. Fittings und Rohre nach einem der Ansprüche 1 bis 7, **dadurch gekennzeichnet, dass** sie weitere Füllstoffe wie Bariumsulfat, Talkum, Glasfasern, Kreide, Kaolin, Asche, Ruß enthalten sowie Additive und/oder Hilfsstoffe, durch die bestimmte Eigenschaften wie antistatisches Verhalten sowie bakterienhemmendes Verhalten unterstützt werden.

9. Fittings und Rohre nach Anspruch 8, **dadurch gekennzeichnet, dass** der Anteil der weiteren Füllstoffe bis zu 70 Gew% bezogen auf das Polymer oder Biopolymer beträgt.

10. Verwendung der Fittings und Rohre nach einem der Ansprüche 1 bis 9 für Raum(innen)lüftungssysteme, im Wasser- und Sanitärinstallationsbereich, für Transportanlagen (Rohrpost) und Elektroinstallationsrohre, wie Elektroinstallationssysteme oder für Rohre, durch die Kabel geführt werden).
